# EUROPEAN PATENT APPLICATION

(11) **EP 4 618 296 A1**
(43) Date of publication of application: **17.09.2025**
(21) Application number: 23929888.8
(22) Date of filing: 19.10.2023
(51) Int. Cl.: H01M 50/477, H01M 50/474, H01M 50/342, H01M 50/489, H01M 50/35

(54) **BATTERY CELL, BATTERY AND ELECTRIC DEVICE**

(30) Priority: 24.03.2023 CN 202320612249 U
(71) Applicant: Contemporary Amperex Technology (Hong Kong) Limited, Hong Kong (HK)
(72) Inventor: KE, Haibo, Ningde, Fujian 352100 (CN); MAO, Guoan, Ningde, Fujian 352100 (CN); LI, Quankun, Ningde, Fujian 352100 (CN); WANG, Peng, Ningde, Fujian 352100 (CN); HUANG, Shoujun, Ningde, Fujian 352100 (CN); CHEN, Shixiang, Ningde, Fujian 352100 (CN)
(74) Representative: Behr, Wolfgang
(86) International application number: PCT/CN2023/125440
(87) International publication number: WO 2024/198316

(57) **Abstract**

An embodiment of the present application provides a battery cell, a battery and an electrical device. The battery cell comprises a shell, an electrode terminal, an electrode assembly, a pressure relief mechanism and an insulating member. The shell comprises a first wall and a second wall, the electrode terminal is provided on the first wall; the electrode assembly is provided inside the shell; and the pressure relief mechanism is provided on the second wall. The insulating member is provided between the first wall and the electrode assembly, the insulating member comprises an insulating member body and a protrusion, the insulating member body has a first surface facing the electrode assembly, and the protrusion is formed on the first surface and abuts on the electrode assembly. The protrusion is provided with a ventilating channel, and the ventilating channel runs through the protrusion along a direction intersecting with the thickness direction of the insulating member body. The battery cell has high reliability.

## Description

### CROSS-REFERENCE TO RELATED APPLICATIONS

The present application claims the priority of Chinese Patent Application CN202320612249.2 filed on March 24, 2023 and entitled "BATTERY CELL, BATTERY AND ELECTRICAL DEVICE", which is incorporated herein by reference in its entirety.

### TECHNICAL FIELD

The present application relates to the technical field of batteries, and specifically, to a battery cell, a battery and an electrical device.

### BACKGROUND

Energy conservation and emission reduction are the key to the sustainable development of the automobile industry. In this case, electric vehicles have become an important part of the sustainable development of the automobile industry because of their advantages of energy saving and environmental friendliness. For the electric vehicles, the battery technology is an important factor related to their development.

Therefore, how to improve the reliability of the battery is an urgent problem to be solved in the development of the battery technologies.

### SUMMARY OF THE INVENTION

The present application provides a battery cell, a battery and an electrical device, and the battery cell has high reliability.

The present application is implemented through the following technical solutions:
In a first aspect, an embodiment of the present application provides a battery cell, which comprises a shell, an electrode terminal, an electrode assembly, a pressure relief mechanism and an insulating member. The shell comprises a first wall and a second wall, the electrode terminal is provided on the first wall; the electrode assembly is provided inside the shell; and the pressure relief mechanism is provided on the second wall. The insulating member is provided between the first wall and the electrode assembly, the insulating member comprises an insulating member body and a protrusion, the insulating member body has a first surface facing the electrode assembly, and the protrusion is formed on the first surface and abuts on the electrode assembly. The protrusion is provided with a ventilating channel, and the ventilating channel runs through the protrusion along a direction intersecting with the thickness direction of the insulating member body.

According to the battery cell of the embodiment of the present application, since the ventilating channel runs through the protrusion along a direction intersecting with the thickness direction of the insulating member body, that is, the extension direction of the ventilating channel intersects with the thickness direction of the insulating member body, and the ventilating channel runs through the protrusion, so that the gas can quickly pass through the protrusion when flowing through the protrusion, thereby reducing the obstruction of the protrusion to gas flow and facilitating gas flow. When thermal runaway occurs in the battery cell, the gas can flow quickly from the gas generating area toward the pressure relief mechanism to improve the reliability of the battery cell.

According to some embodiments of the present application, the protrusion extends along a first direction, the ventilating channel runs through the protrusion along a second direction intersecting with the first direction, and the first direction and the second direction intersect with the thickness direction of the insulating member body.

In the above solution, the extension direction of the ventilating channel intersects with the extension direction of the protrusion, and the extension length of the ventilating channel is short, that is, the path for the gas to pass through the protrusion is short, which facilitates the gas to quickly pass through the protrusion and improves the smoothness of gas flow.

According to some embodiments of the present application, the protrusion comprises a bottom surface and an outer peripheral surface, the bottom surface is used to abut on the electrode assembly, the outer peripheral surface is provided around the bottom surface, the outer peripheral surface connects the bottom surface and the first surface, and the ventilating channel is provided on the outer peripheral surface.

In the above solution, the bottom surface is a surface of the protrusion for abutting on the electrode assembly. By making the bottom surface abut on the electrode assembly, the insulating member can position the electrode assembly, and the electrode assembly has good assembly stability. The ventilating channel is provided on the outer peripheral surface to facilitate the gas to pass through the protrusion, thereby reducing the obstruction of the protrusion to gas flow.

According to some embodiments of the present application, the protrusion is provided with a plurality of ventilating channels, and the plurality of ventilating channels are provided at intervals along the first direction.

In the above solution, the plurality of ventilating channels are provided at intervals along the extension direction of the protrusion, so that there are a plurality of gas flow positions on the protrusion, which is conductive to the gas passing through the protrusion and improving the gas passing efficiency.

According to some embodiments of the present application, there are a plurality of protrusions provided at intervals along the second direction.

In the above solution, the plurality of protrusions are provided at intervals along the second direction, so that the insulating member has high strength, the insulating member has many contact positions with the electrode assembly, and can well limit the electrode assembly.

According to some embodiments of the present application, each protrusion has a ventilating channel.

In the above solution, each protrusion is provided with a ventilating channel to facilitate the gas to pass through the protrusion, reduce the blocking effect of the protrusion on the gas, and facilitate gas flow.

According to some embodiments of the present application, the protrusions comprise a first protrusion, a second protrusion and a third protrusion, the first protrusion and the second protrusion are located at two ends of the insulating member body along the second direction, and the third protrusion is located between the first protrusion and the second protrusion.

In the above solution, the first protrusion and the second protrusion are located at two ends of the insulating member body along the second direction, and the third protrusion is located between the first protrusion and the second protrusion, so that the insulating member body has high strength in the second direction, so that the insulating member has a good limiting effect on the electrode assembly in the second direction.

According to some embodiments of the present application, the first surface, the first protrusion, the third protrusion and the electrode assembly form a first cavity, and along the second direction, there is a first gap between the first protrusion and the shell. The ventilating channel comprises a first ventilating channel provided in the first protrusion, and the first ventilating channel communicates the first cavity and the first gap.

In the above solution, the first surface, the first protrusion, the third protrusion and the electrode assembly form a first cavity. Along the second direction, there is a first gap between the first protrusion and the shell. The first ventilating channel communicates the first cavity and the first gap to facilitate gas flow on both sides of the first protrusion in the second direction, thereby reducing the obstruction of the first protrusion to gas flow.

According to some embodiments of the present application, the first surface, the second protrusion, the third protrusion and the electrode assembly form a second cavity, and along the second direction, there is a second gap between the second protrusion and the shell. The ventilating channel further comprises a second ventilating channel provided in the second protrusion, and the second ventilating channel communicates the second cavity and the second gap.

In the above solution, the first surface, the second protrusion, the third protrusion and the electrode assembly form a second cavity. Along the second direction, there is a second gap between the second protrusion and the shell. The second ventilating channel communicates the second cavity and the second gap to facilitate gas flow on both sides of the second protrusion in the second direction, thereby reducing the obstruction of the second protrusion to gas flow.

According to some embodiments of the present application, the ventilating channel further comprises a third ventilating channel provided in the third protrusion, and the third ventilating channel communicates the first cavity and the second cavity.

In the above solution, the third ventilating channel communicates the first cavity and the second cavity, facilitating flow of the gas on both sides of the third protrusion in the second direction, thereby reducing the obstruction of the third protrusion to gas flow.

According to some embodiments of the present application, the protrusions comprise a first protrusion and a second protrusion provided at intervals along the second direction, and the first surface, the first protrusion, the second protrusion and the electrode assembly form a third cavity. Along the second direction, there is a first gap between the first protrusion and the shell, there is a second gap between the second protrusion and the shell, the ventilating channel comprises a first ventilating channel provided in the first protrusion and a second ventilating channel provided in the second protrusion, the first ventilating channel communicates the first gap and the third cavity, and the second ventilating channel communicates the second gap and the third cavity.

In the above solution, the first ventilating channel communicates the first gap and the third cavity, and the second ventilating channel communicates the third cavity and the second gap, which facilitates flow of the gas located on both sides of the first protrusion in the second direction and the gas located on both sides of the second protrusion in the second direction, thereby reducing the obstruction of the first protrusion and the second protrusion to gas flow.

According to some embodiments of the present application, a plurality of protrusions are provided along both the first direction and the second direction, the ventilating channels are formed between two adjacent protrusions of the plurality of protrusions provided along the first direction and between two adjacent protrusions of the plurality of protrusions provided along the second direction, and the first direction, the second direction and the thickness direction of the insulating member body intersect with each other.

In the above solution, the ventilating channel is provided between two protrusions provided at intervals along the first direction and between two protrusions provided at intervals along the second direction, so that the gas has good fluidity between the first surface and the electrode assembly, reducing the obstruction of the protrusions to gas flow and facilitating gas flow.

According to some embodiments of the present application, the insulating member body is a rectangular plate, the protrusion extends along a first direction, and the first direction is the width direction of the insulating member body.

In the above solution, the first direction is the width direction of the insulating member body, and the protrusion extends along the width direction of the insulating member body, so that the insulating member body has high strength in the width direction of the insulating member body, thereby making the insulating member have a good limiting effect on the electrode assembly in the width direction of the insulating member body.

According to some embodiments of the present application, the second wall is connected to the first wall, a third gap is provided between the electrode assembly and the second wall, and the third gap is communicated with the ventilating channel.

In the above solution, the third gap is provided so that when the battery cell thermally runs away, the gas in the shell can flow to the pressure relief mechanism through the ventilating channel and the third gap, thereby improving the smoothness of gas flow.

According to some embodiments of the present application, the second wall and the first wall are provided opposite to each other along the thickness direction of the insulating member body, the shell further comprises a third wall, the third wall is connected to the second wall and the first wall, a fourth gap is provided between the electrode assembly and the third wall, and the fourth gap communicates the ventilating channel and the pressure relief mechanism.

In the above solution, the fourth gap is provided so that when the battery cell thermally runs away, the gas in the shell can flow to the pressure relief mechanism through the ventilating channel and the fourth gap, thereby improving the smoothness of gas flow. Even if a large amount of gas is generated in the vicinity of the electrode assembly near the electrode terminal, the gas can pass through the protrusion and quickly move from the fourth gap toward the pressure relief hole of the pressure relief mechanism.

According to some embodiments of the present application, the shell comprises a case and an end cover, the case comprises a bottom wall and a side wall, the side wall is provided around the bottom wall, one end of the side wall is connected to the bottom wall, the other end of the side wall forms an opening, the end cover closes the opening, the first wall is the end cover, and the second wall is the side wall or the bottom wall.

In the above solution, the bottom wall is located on the side of the electrode assembly away from the end cover, and the pressure relief mechanism is provided on the side wall or the bottom wall to adapt to different arrangement requirements of the battery cells and facilitate pressure relief of the pressure relief mechanism.

According to some embodiments of the present application, the battery cell further comprises a spacer. The spacer is provided between at least one wall of the shell other than the first wall and the electrode assembly, and is used to isolate the shell from the electrode assembly. An exhaust groove is provided on the side of the spacer facing the electrode assembly and/or the side facing away from the electrode assembly, and the exhaust groove extends to the edge of the spacer.

In the above solution, the spacer is used to isolate the shell from the electrode assembly, reducing the risk of contact between the shell and the electrode assembly. When the spacer is provided below the electrode assembly, the spacer can also play a role in supporting the electrode assembly, so that the electrode assembly is stably positioned inside the shell, reducing the risk of movement of the electrode assembly. The exhaust groove extends to the edge of the spacer, so as to reduce the obstruction of the spacer to gas flow and facilitate gas flow.

According to some embodiments of the present application, the spacer is provided between the second wall and the electrode assembly.

In the above solution, the spacer is used to isolate the second wall from the electrode assembly, and the provision of the exhaust groove can facilitate the gas to flow to the pressure relief mechanism, thereby facilitating the opening of the pressure relief mechanism.

According to some embodiments of the present application, the battery cell further comprises an insulating film, which is wrapped around the outside of the electrode assembly and is used to insulate and isolate the electrode assembly from the shell. The insulating film is connected to the insulating member, the insulating film is provided with through holes, and the through holes and the ventilating channels are provided correspondingly to communicate the through holes and the ventilating channels.

In the above solution, the through holes provided in the insulating film are provided corresponding to the ventilating channels, which can facilitate gas flow while ensuring the connection between the insulating film and the insulating member and the insulation and isolation effect of the insulating film on the electrode assembly. The gas between the insulating film and the shell can enter the ventilating channels through the through holes and flow rapidly toward the pressure relief mechanism.

According to some embodiments of the present application, the insulating film is connected to the insulating member by hot melting.

In the above solution, the insulating film is connected to the protrusion by hot melting, thereby ensuring the connection stability between the insulating film and the protrusion.

According to some embodiments of the present application, the insulating member body further has a second surface, the second surface and the first surface are provided opposite to each other along the thickness direction of the insulating member body, and a groove is formed at a corresponding position of the protrusion on the second surface.

In the above solution, a groove is formed at a corresponding position of the protrusion on the second surface, which can reduce the weight of the insulating member.

In a second aspect, an embodiment of the present application further provides a battery, comprising the battery cell provided in any of the above embodiments.

In a third aspect, an embodiment of the present application further provides an electrical device, comprising the battery cell provided in any of the above embodiments.

Additional aspects and advantages of the present application will be set forth in part in the description which follows, and in part will be obvious from the description which follows, or may be learned by practice of the present application.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle provided in some embodiments of the present application;
Fig. 2 is an exploded view of a battery provided in some embodiments of the present application;
Fig. 3 is an exploded view of a battery cell provided in some embodiments of the present application;
Fig. 4 is a schematic structural diagram of a battery cell provided in some embodiments of the present application;
Fig. 5 is a schematic structural diagram of an insulating member provided in some embodiments of the present application;
Fig. 6 is a schematic structural diagram of an insulating member body provided in some embodiments of the present application;
Fig. 7 is a schematic diagram showing the layout of protrusions and an insulating member body provided in some embodiments of the present application;
Fig. 8 is a sectional diagram of a battery cell provided in some embodiments of the present application;
Fig. 9 is a cross-sectional view of a battery cell provided in some other embodiments of the present application;
Fig. 10 shows a cross-sectional view of a battery cell provided in some other embodiments of the present application;
FIG.11 is a schematic structural diagram of a spacer provided in some embodiments of the present application;
Fig. 12 is a schematic diagram of an insulating member and an insulating film provided in some embodiments of the present application.

In the drawings, the figures are not drawn to the actual scale.

Description of reference numerals: 100-battery; 10-box; 11-first sub-box; 12-second sub-box; 20-battery cell; 21-shell; 211-end cover; 212-case; 2121-bottom wall; 2122-side wall; 213-first wall; 214-second wall; 215-third wall; 22-electrode terminal; 23-electrode assembly; 24-pressure relief mechanism; 25-insulating member; 251-insulating member body; 2511-first surface; 2512-second surface; 2513-positioning portion; 252-protrusion; 252a-first protrusion; 252b-second protrusion; 252c-third protrusion; 2521-ventilating channel; 2521a-first ventilating channel; 2521b-second ventilating channel; 2521c-third ventilating channel; 2522-bottom surface; 2523-outer peripheral surface; 2524-groove; 26-spacer; 261-exhaust groove; 262-third surface; 263-fourth surface; 27-insulating film; 271-through hole; 28-adapter; 200-controller; 300-motor; 1000-vehicle; Q1-first cavity; Q2-first gap; Q3-second cavity; Q4-second gap; Q5-third cavity; Q6-third gap; Q7-fourth gap.

### DETAILED DESCRIPTION OF THE INVENTION

For the objectives, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to restrict the present application. The terms "include" and "having" and any variations thereof in the specification and the claims of the present application as well as the foregoing description of the drawings are intended to cover non-exclusive inclusions. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character *"*/*"* in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In some embodiments, the battery may be a battery module. When there are a plurality of battery cells, the plurality of battery cells are provided and fixed to form a battery module.

In some embodiments, the battery may be a battery pack. The battery pack comprises a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus comprises an energy storage container, or an energy storage cabinet, etc.

In the embodiments of the present application, the battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium-sulfur battery, a magnesium-ion battery, a nickel-metal hydride battery, a nickel-cadmium battery, or a lead storage battery, etc., which is not limited in the embodiments of the present application.

The battery cell generally comprises an electrode assembly. The electrode assembly comprises a positive electrode, a negative electrode and a spacer. During charging and discharging of the battery cell, active ions (such as lithium ions) are intercalated and deintercalated back and forth between the positive electrode and the negative electrode. The spacer is provided between the positive electrode and the negative electrode, and can function to prevent a short circuit between the positive electrode and the negative electrode, while allowing active ions to pass through.

In some embodiments, the positive electrode may be a positive electrode plate, and the positive electrode plate may comprise a positive electrode current collector and a positive electrode active material provided on at least one surface of the positive electrode current collector.

As an example, the positive electrode current collector has two surfaces opposite in its own thickness direction, and the positive electrode active material is provided on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may comprise a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may comprise at least one of the following materials: a lithium-containing phosphate, a lithium transition metal oxide, and a respective modified compound thereof. However, the present application is not limited to these materials, and other conventional materials useful as positive electrode active materials for batteries can also be used.

In some implementations, the negative electrode may be a negative electrode plate, and the negative electrode plate may comprise a negative electrode current collector.

As an example, a metal foil or a composite current collector may be used as the negative electrode current collector. For example, silver surface-treated aluminum or stainless steel, stainless steel, copper, aluminum, nickel, carbon electrode, carbon, nickel, titanium, or the like may be used as the metal foil.

In some embodiments, the negative electrode current collector has two surfaces opposite in its own thickness direction, and the negative electrode active material is provided on either one or both of the two opposite surfaces of the negative electrode current collector.

As an example, a negative electrode active material for a battery well-known in the art may be used as the positive electrode active material. As an example, the negative electrode active material may comprise at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the spacer is a separator. The type of the separator is not particularly limited in the present application, and any well-known separator having good chemical stability, mechanical stability, and a porous structure may be selected.

As an example, the main material of the separator may be selected from at least one of glass fiber, non-woven fabric, polyethylene, polypropylene, polyvinylidene fluoride, and ceramic. The separator may be a single-layer film, or may be a multi-layer composite film, which is not particularly limited. When the separator is a multi-layer composite film, the material in each layer may be same or different, which is not particularly limited. The spacer may be a separate component located between the positive electrode and the negative electrode, or may be attached to the surface of the positive electrode and the surface of the negative electrode.

In some embodiments, the spacer is a solid electrolyte. The solid electrolyte is provided between the positive electrode and the negative electrode, and functions to transport ions and isolate the positive electrode from the negative electrode.

In some embodiments, the electrode assembly is a wound structure. The positive electrode plate and the negative electrode plate are wound into a wound structure.

In some embodiments, the electrode assembly is a stacked structure.

In some implementations, the battery cell may comprise a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

In some embodiments, the shell comprises an end cover and a case, the case is provided with an opening, and the end cover closes the opening to form a closed space for accommodating substances such as the electrode assembly and the electrolyte. The case may be provided with one or more openings. One or more end covers may also be provided.

In some implementations, the shell is provided with at least one electrode terminal, and the electrode terminal is electrically connected to a tab of the electrode assembly. The electrode terminal can be directly connected to the tab, or can also be indirectly connected to the tab through an adapter. The electrode terminal may be provided on the end cover, or may also be provided on the case.

In some embodiments, the shell is provided with an explosion-proof valve. The explosion-proof valve is configured to release the internal pressure of the battery cell.

As an example, the battery cell may be a cylindrical battery cell, a prismatic battery cell, a pouch cell, or a battery cell in another shape, the prismatic battery cell comprises a square-shell battery cell, a blade-shaped battery cell, and a multi-prism battery, and the multi-prism battery may be, for example, a hexagonal prism battery, which is not specifically limited in the embodiments of the present application.

The battery cell further comprises a pressure relief mechanism, which can be provided on the end cover to release the internal pressure or temperature of the battery cell.

For the development of battery technologies, various design factors should be considered, such as energy density, discharge capacity, charging-discharging rate, and other performance parameters. In addition, the battery reliability should also be considered.

In some embodiments, the end cover of the battery cell is welded to the case, and the insulating member is provided on the side of the end cover facing the interior of the battery cell. A protrusion is provided on the side of the insulating member facing the electrode assembly, and the protrusion is used to abut on the electrode assembly to limit the movement of the electrode assembly. When a battery cell is thermally runaway due to a short circuit between the positive and negative electrodes, overcharging, etc., and a local area inside the battery cell is thermally runaway, a large amount of gas is generated in this local area, and the gas pressure in this area rises rapidly. Due to the obstruction of the protrusion, the fluidity of the gas on both sides of the protrusion is poor, resulting in a small amount of gas flowing from the inside of the battery cell toward the pressure relief mechanism. The gas generated in the area generating a large amount of gas cannot flow quickly to the pressure relief mechanism, causing the gas to impact the nearby case, making the weld between the shell and the end cover to crack, resulting in poor reliability of the battery cell.

In view of this, in order to solve the problem of poor reliability of the battery cell resulting from poor gas fluidity inside the battery cell, the present application has designed a technical solution, wherein an insulating member comprises an insulating member body and a protrusion, the protrusion is formed on the first surface of the insulating member body facing an electrode assembly, a ventilating channel is provided on the protrusion, and the ventilating channel runs through the protrusion along a direction intersecting with the thickness direction of the insulating member body, which helps the gas to flow in the direction intersecting with the thickness direction of the insulating member body and pass through the protrusion, thereby reducing the obstruction of the protrusion to gas flow, improving the smoothness of gas flow, and facilitating the gas to flow toward the pressure relief mechanism.

In such a battery cell, since the ventilating channel runs through the protrusion along a direction intersecting with the thickness direction of the insulating member body, that is, the extension direction of the ventilating channel intersects with the thickness direction of the insulating member body, and the ventilating channel runs through the protrusion, so that the gas can quickly pass through the protrusion via the ventilating channel when flowing through the protrusion, thereby reducing the obstruction of the protrusion to gas flow and facilitating gas flow. When thermal runaway occurs in the battery cell, the gas can flow quickly from the gas-generating area toward the pressure relief mechanism. On the one hand, this facilitates the timely opening (actuation) of the pressure relief mechanism. On the other hand, after the pressure relief mechanism has a pressure relief hole formed, the gas can be quickly released, reducing the risk of cracking and failure at the connection of the shell and improving the reliability of the battery cell.

The battery cell disclosed in the embodiments of the present application may be used in, but not limited to, electrical devices, such as a vehicle, a ship, or an aircraft. A power supply system of the electrical device may be composed of battery cells, batteries, and the like disclosed in the present application.

An embodiment of the present application provides an electrical device using a battery as a power source. The electrical device may be, but is not limited to, a mobile phone, a tablet PC, a laptop, an electric toy, an electric tool, an electric bicycle, an electric motorcycle, an electric vehicle, a ship, a spacecraft, and the like. Among them, the electric toy may comprise a stationary or mobile electric toy, for example, a game console, an electric toy car, an electric toy ship, an electric toy aircraft, or the like, and the spacecraft may comprise an aircraft, a rocket, a space shuttle, a spaceship, or the like.

For ease of description, the following embodiments are illustrated by taking an electrical device being a vehicle 1000 in an embodiment of the present application as an example.

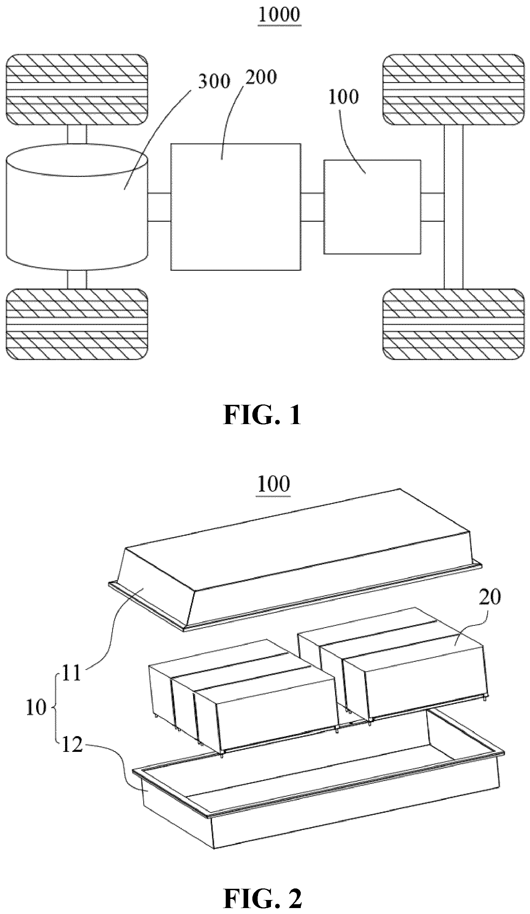

Referring to Fig. 1, Fig. 1 is a schematic structural diagram of a vehicle provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is provided in the vehicle 1000. The battery 100 may be provided at the bottom or head portion or tail portion of the vehicle 1000. The battery 100 may be used for supplying power to the vehicle 1000. For example, the battery 100 may be used as an operating power source of the vehicle 1000, which is used for a circuit system of the vehicle 1000, for example, for operation power requirements of the vehicle 1000 during starting, navigation, and running.

The vehicle 1000 may further include a controller 200 and a motor 300. The controller 200 is configured to control the battery 100 to supply power to the motor 300, for example, serve to satisfy operating power demand when the vehicle 1000 is starting, navigating, and running.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

Referring to Fig. 2, Fig. 2 is an exploded view of a battery according to some embodiments of the present application. The battery 100 comprises a box 10 and a battery cell 20, and the battery cell 20 is accommodated in the box 10. The box 10 is used to provide an accommodating space for the battery cells 20, and the box 10 can be of a variety of structures. In some embodiments, the box 10 may comprise a first sub-box 11 and a second sub-box 12. The first sub-box 11 and the second sub-box 12 are covered by each other, and the first sub-box 11 and the second sub-box 12 together define an accommodating space for accommodating the battery cells 20. The second sub-box 12 may be of a hollow structure with one end open, the first sub-box 11 may be of a plate-like structure, and the first sub-box 11 covers the opening side of the second sub-box 12, so that the first sub-box 11 and the second sub-box 12 together define the accommodating space. Both of the first sub-box 11 and the second sub-box 12 may also be of a hollow structure with one side open, and the opening side of the first sub-box 11 covers the opening side of the second sub-box 12.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series, and then the whole composed of the plurality of battery cells 20 may be accommodated in the box 10. Of course, the battery 100 may also be in the form of a battery module first formed by the plurality of battery cells 20 being connected in series or in parallel or in parallel-series, then the plurality of battery modules may be connected in series or in parallel or in parallel-series to form a whole, and accommodated in the box 10. The battery 100 may further include other structures, for example, the battery 100 may further include a current converging component for achieving electrical connection between the plurality of battery cells 20.

The battery cell 20 may be a secondary battery or a primary battery; and the battery cell 20 may also be a lithium-sulfur battery, a sodium-ion battery or a magnesium-ion battery, but is not limited thereto.

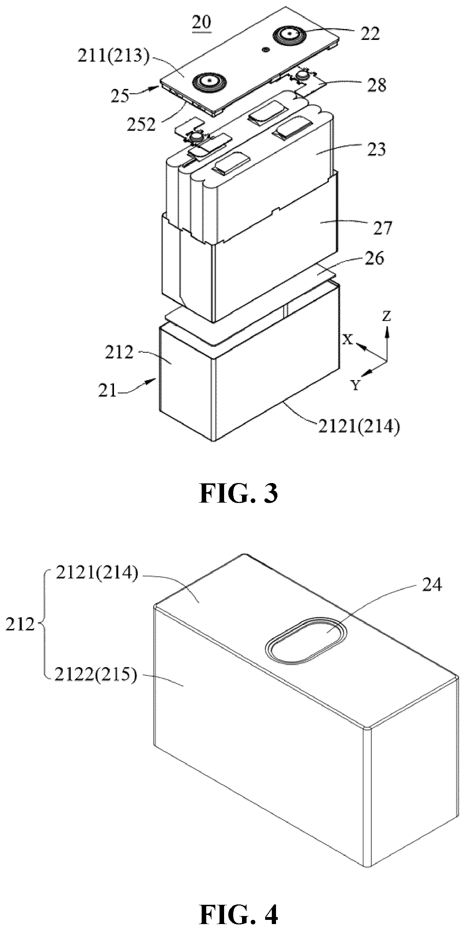

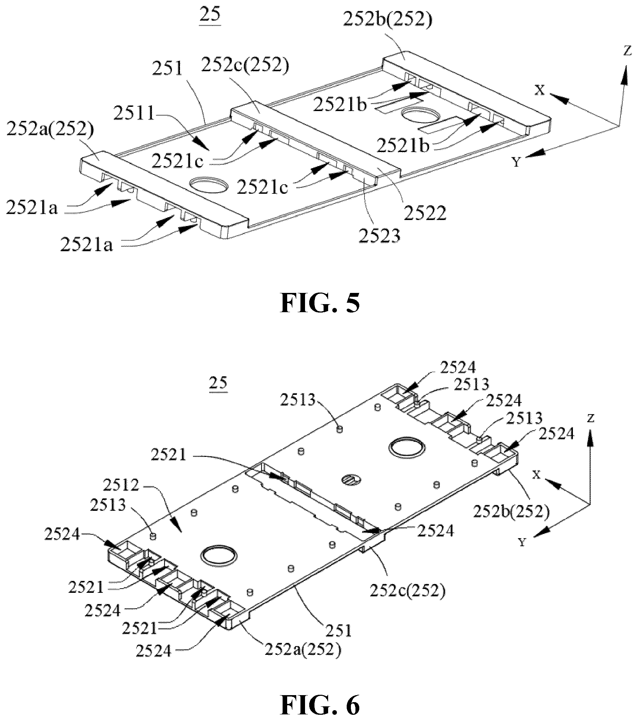

Referring to Fig. 3 to Fig. 6, Fig. 3 is an exploded view of a battery cell provided in some embodiments of the present application, Fig. 4 is a schematic structural diagram of a battery cell provided in some embodiments of the present application, Fig. 5 is a schematic structural diagram of an insulating member provided in some embodiments of the present application, and Fig. 6 is a schematic structural diagram of an insulating member body provided in some embodiments of the present application. According to some embodiments of the present application, an embodiment of the present application provides a battery cell 20. The battery cell 20 comprises a shell 21, an electrode terminal 22, an electrode assembly 23, a pressure relief mechanism 24 and an insulating member 25. The shell 21 comprises a first wall 213 and a second wall 214, the electrode terminal 22 is provided on the first wall 213; the electrode assembly 23 is provided inside the shell 21; and the pressure relief mechanism 24 is provided on the second wall 214. The insulating member 25 is provided between the first wall 213 and the electrode assembly 23. The insulating member 25 comprises an insulating member body 251 and a protrusion 252. The insulating member body 251 has a first surface 2511 facing the electrode assembly 23. The protrusion 252 is formed on the first surface 2511 and the protrusion 252 abuts on the electrode assembly 23. The protrusion 252 is provided with a ventilating channel 2521, and the ventilating channel 2521 runs through the protrusion 252 along a direction intersecting with the thickness direction Z of the insulating member body 251.

In the figure, the direction indicated by the letter Z is the thickness direction of the insulating member body 251, and the thickness direction Z of the insulating member body 251 may be parallel to the thickness direction of the first wall 213.

The shell 21 may comprise an end cover 211 and a case 212, the case 212 has an opening, the end cover 211 closes the opening, and the end cover 211 is connected to the case 212 to isolate the internal environment of the battery cell 20 from the external environment. The end cover 211 may be welded to the case 212 so that the end cover 211 and the case 212 are firmly connected. The first wall 213 may be the end cover 211, and the second wall 214 may be a wall of the case 212; or, the first wall 213 may be a wall of the case 212, and the second wall 214 may be the end cover 211; or, the first wall 213 and the second wall 214 may be two different walls of the case 212.

The end cover 211 is a component that covers an opening of the case 212 to isolate an internal environment of the battery cell 20 from an external environment. Without limitation, the shape of the end cover 211 may be adaptive to the shape of the case 212 so as to be matched with the case 212. Optionally, the end cover 211 may be made of a material (such as an aluminum alloy) with a certain hardness and strength, so that the end cover 211 is not easy to be deformed when being pressed and collided, the battery cell 20 can have a higher structural strength, and the safety performance can also be improved. Functional components such as electrode terminals 22 may be provided on the end cover 211. The electrode terminal 22 may be configured to be electrically connected to the electrode assembly 23, for outputting or inputting electric energy of the battery cell 20. The end cover 211 may be made of various materials, such as copper, iron, aluminum, stainless steel, aluminum alloy, and plastic, which is not particularly limited in the embodiments of the present application. In some embodiments, an insulating structure may be further provided on an inner side of the end cover 211 and the insulating structure may be used for isolating an electrical connection component in the case 212 from the end cover 211, thereby reducing the risk of short circuit. For example, the insulating structure may be made of plastic, rubber, and the like.

The case 212 is an assembly configured to match the end cover 211 to form the internal environment of the battery cell 20. The formed internal environment may be configured to accommodate the electrode assembly 23, an electrolytic solution, and other components. The case 212 and the end cover 211 may be separate components. The case 212 may be of various shapes and size. Specifically, the shape of the case 212 may be determined according to the specific shape and size of the electrode assembly 23. The case 212 may be made of various materials, such as copper, iron, aluminum, stainless steel, aluminum alloy, and plastic, which is not particularly limited in the embodiments of the present application. The embodiment of the present application is described by taking the case 212 as a cuboid as an example.

The electrode assembly 23 is a component in which an electrochemical reaction occurs in the battery cell 20. One or more electrode assemblies 23 may be included within the case 212.

The electrode terminal 22 may be configured to be electrically connected to the electrode assembly 23, for outputting or inputting electric energy of the battery cell 20. The tabs of the electrode assembly 23 and the electrode terminals 22 may be electrically connected via an adapter 28.

The pressure relief mechanism 24 refers to an element or component that is actuated to relieve an internal pressure or heat when the internal pressure or temperature of the battery cell 20 reaches a predetermined threshold. The pressure relief mechanism 24 may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell 20 reaches a predetermined threshold, the pressure relief mechanism 24 performs an action, or a weak structure provided in the pressure relief mechanism 24 is damaged, so as to form a pressure relief hole for relieving the internal pressure or temperature. The pressure relief mechanism 24 and the second wall 214 may be an integrated structure or separate structures. When the pressure relief mechanism 24 and the second wall 214 are an integrated structure, the pressure relief mechanism 24 may be a thinned area on the second wall 214 or a notch provided on the second wall 214. When the pressure relief mechanism 24 and the second wall 214 are separate structures, a hole is provided on the second wall 214, and the pressure relief mechanism 24 is connected to the second wall 214 by welding or the like and covers the hole.

The term "actuate" referred to in the present application means that the pressure relief mechanism 24 performs an action or is activated to a certain state, so that the internal pressure and temperature of the battery cell 20 can be relieved. The action performed by the pressure relief mechanism 24 may include, but is not limited to: at least a part of the pressure relief mechanism 24 being broken, crushed, torn, opened, or the like. When the pressure relief mechanism 24 is actuated, high-temperature and high-pressure substances (such as gas) inside the battery cell 20 are discharged as emissions outwards from the actuated part. In this way, the pressure and heat in the battery cell 20 can be released at a controllable pressure or temperature, thereby avoiding more serious potential accidents.

The insulating member 25 is an electrical insulating member, and is used to insulate and isolate the first wall 213 from the electrode assembly 23.

The first surface 2511 is a surface of the insulating member body 251 facing the electrode assembly 23, that is, the first surface 2511 is provided facing away from the first wall 213.

The insulating member body 251 further has a second surface 2512, the second surface 2512 is provided opposite to the first surface 2511 along the thickness direction Z of the insulating member body 251. The second surface 2512 faces away from the electrode assembly 23, that is, the second surface 2512 faces the first wall 213.

In some embodiments, as shown in Fig. 6, the second surface 2512 is provided with a positioning portion 2513, the first wall 213 is provided with a positioning hole (not shown) corresponding to the positioning portion 2513, and the positioning portion 2513 is inserted into the positioning hole. The positioning portion 2513 is a component provided on the second surface 2512 and connected to the first wall 213 for positioning. The positioning portion 2513 may protrude from the second surface 2512. The positioning portion 2513 may be a positioning rod, and the cross section of the positioning rod may be circular, rectangular, triangular, or irregularly shaped. Optionally, the cross section of the positioning rod is circular for easy processing. The shape of the positioning hole corresponds to the cross-sectional shape of the positioning rod.

The protrusion 252 is formed on the first surface 2511. The protrusion 252 and the insulating member body 251 may be separately provided, and the protrusion 252 is connected to the first surface 2511. Alternatively, the protrusion 252 and the insulating member body 251 may be integrally formed and the protrusion 252 protrudes from the first surface 2511.

The protrusion 252 is a portion of the insulating member 25 that is used to abut on the electrode assembly 23. Here, abutment means that the protrusion 252 is in contact with the electrode assembly 23, and that there is an interaction force between the protrusion 252 and the electrode assembly 23. The protrusion 252 may directly abut on the electrode assembly 23 or may indirectly abut on the electrode assembly 23 through other components.

The ventilating channel 2521 is a hole that runs through the protrusion 252 along a direction intersecting with the thickness direction Z of the insulating member body 251. The extension direction of the ventilating channel 2521 may be parallel to the first surface 2511, or may also intersect with the first surface 2511.

According to the battery cell 20 of the embodiment of the present application, since the ventilating channel 2521 runs through the protrusion 252 along a direction intersecting with the thickness direction Z of the insulating member body 251, that is, the extension direction of the ventilating channel 2521 intersects with the thickness direction Z of the insulating member body 251, and the ventilating channel 2521 runs through the protrusion 252, so that the gas can quickly pass through the protrusion 252 when flowing through the protrusion 252, thereby reducing the obstruction of the protrusion 252 to gas flow and facilitating gas flow. When thermal runaway occurs in the battery cell 20, the gas can flow quickly from the gas-generating area toward the pressure relief mechanism 24. On the one hand, this facilitates the timely opening (actuation) of the pressure relief mechanism. On the other hand, after the pressure relief mechanism has a pressure relief hole formed, the gas can be quickly released, reducing the risk of cracking and failure at the connection of the shell 21 (such as the connection between the end cover 211 and the case 212) and improving the reliability of the battery cell 20.

Referring to Fig. 5 and Fig. 6, according to some embodiments of the present application, the protrusion 252 extends along a first direction X, the ventilating channel 2521 runs through the protrusion 252 along a second direction Y intersecting with the first direction X, and the first direction X and the second direction Y intersect with the thickness direction Z of the insulating member body 251.

In the figure, the direction indicated by the letter X is the first direction, and the direction indicated by the letter Y is the second direction. Both the first direction X and the second direction Y intersect with the thickness direction Z of the insulating member body 251.

The protrusion 252 extends along the first direction X, and the length direction of the protrusion 252 is parallel to the first direction X. For example, when the protrusion 252 is in the shape of an elongated strip, the length direction of the protrusion 252 is parallel to the first direction X. The cross section of the protrusion 252 may be a rectangle, a trapezoid, a triangle, or the like.

The protrusion 252 extends along the first direction X. The protrusion 252 and the insulating member body 251 have a larger overlapping area in the first direction X, which can increase the strength of the insulating member body 251 in the first direction X.

The ventilating channel 2521 runs through the protrusion 252 along the second direction Y intersecting with the first direction X, that is, the extension direction of the ventilating channel 2521 is parallel to the second direction Y. Optionally, the second direction Y is perpendicular to the first direction X. In this case, the extension length of the ventilating channel 2521 is shorter, so that the gas can pass through the protrusion 252 quickly.

In some embodiments, as shown in Fig. 5 and Fig. 6, the first direction X and the second direction Y may both be parallel to the first surface 2511, and a plane formed by the first direction X and the second direction Y is parallel to the first surface. That is, the first direction X, the second direction Y and the thickness direction Z of the insulating member body can be perpendicular to each other.

In some embodiments, the extension direction of the ventilating channel 2521 is perpendicular to the extension direction of the protrusion 252.

In the above solution, the extension direction of the ventilating channel 2521 intersects with the extension direction of the protrusion 252, and the extension length of the ventilating channel 2521 is short, that is, the path for the gas to pass through the protrusion 252 is short, which facilitates the gas to quickly pass through the protrusion 252 and improves the smoothness of gas flow.

In some embodiments, the extension direction of the ventilating channel 2521 is parallel to the extension direction of the protrusion 252.

Referring to Fig. 3, Fig. 5 and Fig. 6, according to some embodiments of the present application, the protrusion 252 comprises a bottom surface 2522 and an outer peripheral surface 2523, the bottom surface 2522 is used to abut on the electrode assembly 23, the outer peripheral surface 2523 is provided around the bottom surface 2522, the outer peripheral surface 2523 connects the bottom surface 2522 and the first surface 2511, and the ventilating channel 2521 is provided on the outer peripheral surface 2523.

The bottom surface 2522 is the surface of the protrusion 252 facing the electrode assembly 23, and the bottom surface 2522 is used to abut on the electrode assembly 23, that is, the bottom surface 2522 is the surface of the protrusion 252 facing away from the first surface 2511.

The outer peripheral surface 2523 is provided around the bottom surface 2522, and the outer peripheral surface 2523 is provided around the edge of the bottom surface 2522.

In some embodiments, the outer peripheral surface 2523 may include two opposite surfaces along the width direction of the protrusion 252, and the ventilating channel 2521 may run through the two surfaces so that the gas can flow on both sides of the protrusion 252 in the width direction.

In the above solution, the bottom surface 2522 is a surface of the protrusion 252 for abutting on the electrode assembly 23. By making the bottom surface 2522 abut on the electrode assembly 23, the insulating member 25 can position the electrode assembly 23, and the electrode assembly 23 has good assembly stability. The ventilating channel 2521 is provided on the outer peripheral surface 2523 to facilitate the gas to pass through the protrusion 252, thereby reducing the obstruction of the protrusion 252 to gas flow.

In some embodiments, in the thickness direction Z of the insulating member body 251, the ventilating channel 2521 may extend from the first surface 2511 toward the bottom surface 2522. In order to ensure the strength of the protrusion 252, a certain distance is provided between the ventilating channel 2521 and the bottom surface 2522 in the thickness direction Z of the insulating member body 251.

In some embodiments, the extension direction of the ventilating channel 2521 may intersect with the extension direction of the protrusion 252, so that gas located on both sides of the extension direction of the protrusion 252 can pass through the protrusion 252. For example, the angle between the extension direction of the ventilating channel 2521 and the extension direction of the protrusion 252 can be 70°-110°. Optionally, the angle can be 70°, 75°, 80°, 85°, 90°, 95°, 100°, 105° or 110°. In some embodiments, the angle may be 90°, that is, the extension direction of the ventilating channel 2521 may be perpendicular to the extension direction of the protrusion 252.

Referring to Fig. 5 and Fig. 6, according to some embodiments of the present application, the protrusion 252 is provided with a plurality of ventilating channels 2521, and the plurality of ventilating channels 2521 are provided at intervals along the first direction X.

The plurality of ventilating channels 2521 are provided at intervals along the first direction X. In other words, the plurality of ventilating channels 2521 are provided at intervals along the extending direction of the protrusion 252. The plurality of ventilating channels 2521 may be located on a straight line parallel to the first direction X, or the plurality of ventilating channels 2521 may be dispersedly provided.

In the above solution, the plurality of ventilating channels 2521 are provided at intervals along the extension direction of the protrusion 252, so that there are a plurality of gas flow positions on the protrusion 252, which is conductive to the gas passing through the protrusion 252 and improving the gas passing efficiency.

Referring to Fig. 5 and Fig. 6, according to some embodiments of the present application, there are a plurality of protrusions 252, and the plurality of protrusions 252 are provided at intervals along the second direction Y.

The plurality of protrusions 252 are provided at intervals along the second direction Y, and the plurality of protrusions 252 are provided in parallel. The positions of the ventilating channels 2521 provided on the plurality of protrusions 252 can be the same, for example, the ventilating channels 2521 of the plurality of protrusions 252 overlap in the second direction Y, which is convenient for processing and manufacturing; or, the positions of the ventilating channels 2521 provided on the plurality of protrusions 252 can be different, and the ventilating channels 2521 of the plurality of protrusions 252 do not overlap or partially overlap in the second direction Y.

In the above solution, the plurality of protrusions 252 are provided at intervals along the second direction Y, so that the insulating member 25 has high strength, the insulating member 25 has many contact positions with the electrode assembly 23, and can well limit the electrode assembly 23.

According to some embodiments of the present application, each protrusion 252 has a ventilating channel 2521.

Each protrusion 252 is provided with a ventilating channel 2521 to facilitate the gas to pass through the protrusion 252, reduce the blocking effect of the protrusion 252 on the gas, and facilitate gas flow.

In some embodiments, some protrusions 252 in the plurality of protrusions 252 may not be provided with the ventilating channels 2521.

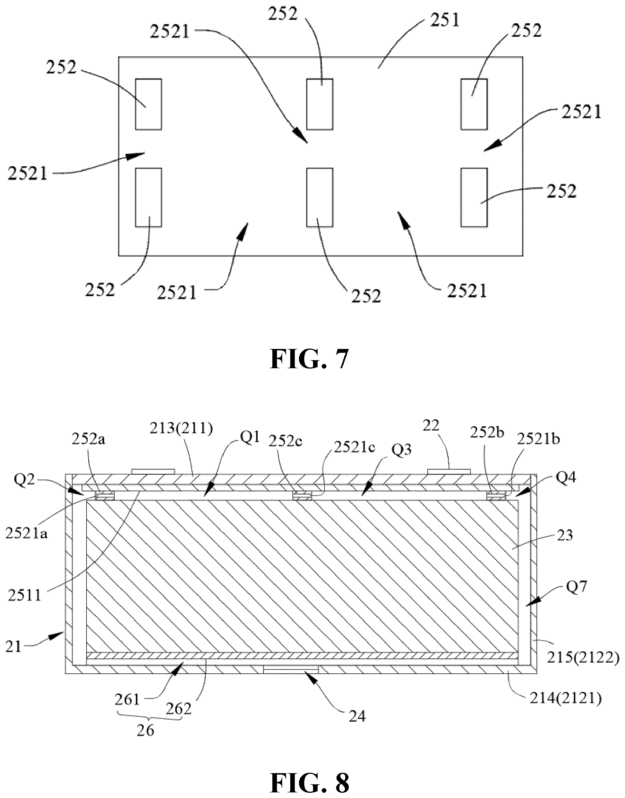

Referring to Fig. 7, Fig. 7 is a schematic diagram showing the layout of protrusions and an insulating member body provided in some embodiments of the present application. In some embodiments, the protrusion 252 may be spaced apart from the edge of the insulating member body 251, and the ventilating channel 2521 may be formed between the protrusion 252 and the edge of the insulating member body 251. For example, the protrusion 252 is spaced apart from the edge of the insulating member body 251 in the length direction. And/or, the protrusion 252 is spaced apart from the edge of the insulating member body 251 in the width direction.

Referring to Fig. 5 and Fig. 6, according to some embodiments of the present application, the protrusions 252 comprise a first protrusion 252a, a second protrusion 252b and a third protrusion 252c, the first protrusion 252a and the second protrusion 252b are located at two ends of the insulating member body 251 along the second direction Y, and the third protrusion 252c is located between the first protrusion 252a and the second protrusion 252b.

The first protrusion 252a, the second protrusion 252b, and the third protrusion 252c may be sequentially provided along the second direction. The first protrusion 252a, the second protrusion 252b and the third protrusion 252c all extend along the first direction X, and their length directions may be parallel to the first direction X.

In the above solution, the first protrusion 252a and the second protrusion 252b are located at two ends of the insulating member body 251 along the second direction Y, and the third protrusion 252c is located between the first protrusion 252a and the second protrusion 252b, so that the insulating member body 251 has high strength in the second direction Y, so that the insulating member 25 has a good limiting effect on the electrode assembly 23 in the second direction Y.

Referring to Fig. 5 and Fig. 6, and further referring to Fig. 8, Fig. 8 is a sectional diagram of a battery cell provided in some embodiments of the present application. According to some embodiments of the present application, the first surface 2511, the first protrusion 252a, the third protrusion 252c and the electrode assembly 23 form a first cavity Q1, and along the second direction Y, there is a first gap Q2 between the first protrusion 252a and the shell 21. The ventilating channel 2521 comprises a first ventilating channel 2521a provided in the first protrusion 252a, and the first ventilating channel 2521a communicates the first cavity Q1 and the first gap Q2.

The first protrusion 252a and the third protrusion 252c respectively abut on the electrode assembly 23, and the first cavity Q1 can be a space enclosed by the first surface 2511, the side of the first protrusion 252a facing the third protrusion 252c, the side of the third protrusion 252c facing the first protrusion 252a, and the side of the electrode assembly 23 facing the first surface 2511.

"There is a first gap Q2 between the first protrusion 252a and the shell 21 along the second direction Y" means that the side of the first protrusion 252a facing away from the third protrusion 252c is at least partially not in contact with the inner surface of the shell 21.

The first ventilating channel 2521a is a hole that runs through the first protrusion 252a along the second direction Y to communicate the first cavity Q1 and the first gap Q2.

In the above solution, the first ventilating channel 2521a communicates the first cavity Q1 and the first gap Q2, facilitating flow of the gas on both sides of the first protrusion 252a in the second direction Y, thereby reducing the obstruction of the first protrusion 252a to gas flow.

Referring to Fig. 5, Fig. 6 and Fig. 8, according to some embodiments of the present application, the first surface 2511, the second protrusion 252b, the third protrusion 252c and the electrode assembly 23 form a second cavity Q3, and along the second direction Y, there is a second gap Q4 between the second protrusion 252b and the shell 21. The ventilating channel 2521 further comprises a second ventilating channel 2521b provided in the second protrusion 252b, and the second ventilating channel 2521b communicates the second cavity Q3 and the second gap Q4.

The second protrusion 252b and the third protrusion 252c respectively abut on the electrode assembly 23, and the second cavity Q3 can be a space enclosed by the first surface 2511, the side of the second protrusion 252b facing the third protrusion 252c, the side of the third protrusion 252c facing the second protrusion 252b, and the side of the electrode assembly 23 facing the first surface 2511.

"There is a second gap Q4 between the second protrusion 252b and the shell 21 along the second direction Y" means that the side of the second protrusion 252b facing away from the third protrusion 252c is at least partially not in contact with the inner surface of the shell 21.

The second ventilating channel 2521b is a hole that runs through the second protrusion 252b along the second direction Y to communicate the second cavity Q3 and the second gap Q4.

In the above solution, the second ventilating channel 2521b communicates the second cavity Q3 and the second gap Q4, facilitating flow of the gas on both sides of the second protrusion 252b in the second direction Y, thereby reducing the obstruction of the second protrusion 252b to gas flow.

Referring to Fig. 5, Fig. 6 and Fig. 8, according to some embodiments of the present application, the ventilating channel 2521 further comprises a third ventilating channel 2521c provided in the third protrusion 252c, and the third ventilating channel 2521c communicates the first cavity Q1 and the second cavity Q3.

The third ventilating channel 2521c is a hole that runs through the third protrusion 252c along the second direction Y to communicate the first cavity Q1 and the second cavity Q3.

In the above solution, the third ventilating channel 2521c communicates the first cavity Q1 and the second cavity Q3, facilitating flow of the gas on both sides of the third protrusion 252c in the second direction Y, thereby reducing the obstruction of the third protrusion 252c to gas flow.

In some embodiments, in the first direction X, there may be a gap between the protrusion 252 and the case 212. When the gas flows toward the protrusion 252 along the second direction Y, the gas can pass through the protrusion 252 from the ventilating channel 2521, and can also pass over the protrusion 252 from the gap between the two ends of the protrusion 252 in the first direction X and the case 212.

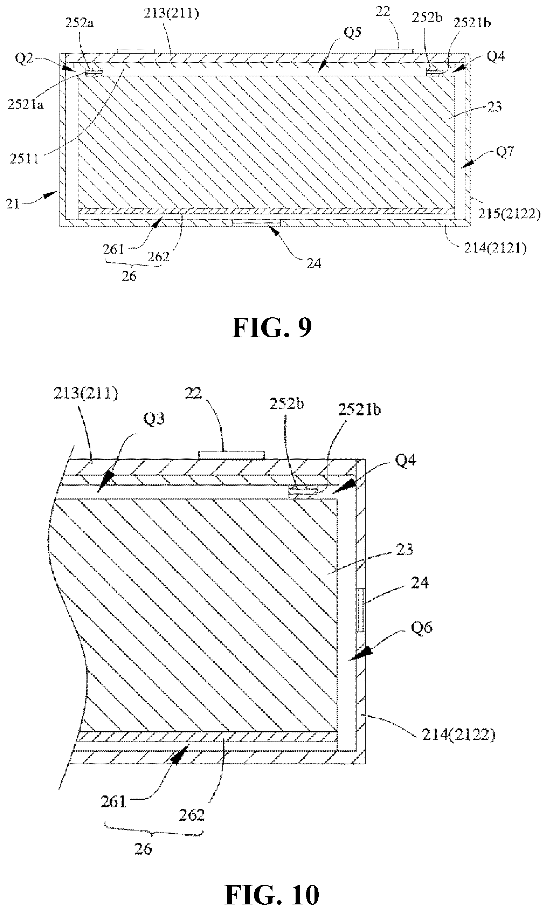

Referring to Fig. 9, Fig. 9 is a sectional diagram of a battery cell provided in some other embodiments of the present application. According to some embodiments of the present application, the protrusion 252 comprises a first protrusion 252a and a second protrusion 252b provided at intervals along the second direction Y, and the first surface 2511, the first protrusion 252a, the second protrusion 252b and the electrode assembly 23 form a third cavity Q5. Along the second direction Y, there is a first gap Q2 between the first protrusion 252a and the shell 21, there is a second gap Q4 between the second protrusion 252b and the shell 21, the ventilating channel 2521 comprises a first ventilating channel 2521a provided in the first protrusion 252a and a second ventilating channel 2521b provided in the second protrusion 252b, the first ventilating channel 2521a communicates the first gap Q2 and the third cavity Q5, and the second ventilating channel 2521b communicates the second gap Q4 and the third cavity Q5.

The first protrusion 252a and the second protrusion 252b respectively abut on the electrode assembly 23, and the third cavity Q5 can be a space enclosed by the first surface 2511, the side of the first protrusion 252a facing the second protrusion 252b, the side of the second protrusion 252b facing the first protrusion 252a, and the side of the electrode assembly 23 facing the first surface 2511.

"There is a first gap Q2 between the first protrusion 252a and the case 212 along the second direction Y" means that the side of the first protrusion 252a facing away from the second protrusion 252b is at least partially not in contact with the inner surface of the shell 21. "There is a second gap Q4 between the second protrusion 252b and the shell 21 along the second direction Y" means that the side of the second protrusion 252b facing away from the first protrusion 252a is at least partially not in contact with the inner surface of the shell 21.

In the above solution, the first ventilating channel 2521a communicates the first gap Q2 and the third cavity Q5, and the second ventilating channel communicates the third cavity Q5 and the second gap Q4, which facilitates flow of the gas located on both sides of the first protrusion 252a in the second direction Y and the gas located on both sides of the second protrusion 252b in the second direction Y, thereby reducing the obstruction of the first protrusion 252a and the second protrusion 252b to gas flow.

Referring to Fig. 7, according to some embodiments of the present application, a plurality of protrusions 252 are provided along both the first direction X and the second direction Y, and ventilating channels 2521 are formed between two adjacent protrusions of the plurality of protrusions 252 provided along the first direction X and between two adjacent protrusions of the plurality of protrusions 252 provided along the second direction Y, and the first direction X, the second direction Y and the thickness direction Z of the insulating member body 251 intersect with each other.

In the above solution, the ventilating channel 2521 is provided between two protrusions 252 provided at intervals along the first direction X and between two protrusions 252 provided at intervals along the second direction Y, so that the gas has good fluidity between the first surface 2511 and the electrode assembly 23, reducing the obstruction of the protrusions 252 to gas flow and facilitating gas flow.

Referring to Fig. 5 and Fig. 6, according to some embodiments of the present application, the insulating member body 251 is a rectangular plate, the protrusion 252 extends along a first direction X, and the first direction X is the width direction of the insulating member body 251.

The insulating member body 251 can be a rectangular plate, and the end cover 211 can also be a rectangular plate that matches the insulating member body 251. When observed along the thickness direction Z of the insulating member body 251, the insulating member body 251 overlaps with the end cover 211, and the outline of the insulating member body 251 can be located within the outline of the end cover 211.

The first direction X may be the width direction of the insulating member body 251. In some embodiments, the second direction Y may be the length direction of the insulating member body 251. The protrusion 252 extends along the first direction X, and the protrusion 252 and the insulating member body 251 may have a larger overlapping area in the width direction of the insulating member body 251. For example, the protrusion 252 may run through the insulating member body 251 in the width direction of the insulating member body 251 to increase the strength of the insulating member body 251 in its width direction.

In the above solution, the first direction X may be the width direction of the insulating member body 251, so that the insulating member body 251 has high strength in the width direction of the insulating member body 251, thereby making the insulating member 25 have a good limiting effect on the electrode assembly 23 in the width direction of the insulating member body 251.

Referring to Fig. 10, Fig. 10 is a sectional diagram of a battery cell provided in some other embodiments of the present application. According to some embodiments of the present application, the second wall 214 is connected to the first wall 213, a third gap Q6 is provided between the electrode assembly 23 and the second wall 214, and the third gap Q6 is communicated with the ventilating channel 2521.

The third gap Q6 is formed between the electrode assembly 23 and the second wall 214.

The third gap Q6 may be formed by the spacing between the electrode assembly 23 and the second wall 214, or by providing a component with an exhaust groove.

In the above solution, the third gap Q6 is provided so that when the battery cell 20 thermally runs away, the gas in the shell 21 can flow to the pressure relief mechanism 24 through the ventilating channel 2521 and the third gap Q6, thereby improving the smoothness of gas flow.

Referring to Fig. 8 and Fig. 9, according to some embodiments of the present application, the second wall 214 and the first wall 213 are provided opposite to each other along the thickness direction Z of the insulating member body 251, the shell 21 further comprises a third wall 215, the third wall 215 is connected to the second wall 214 and the first wall 213, a fourth gap Q7 is provided between the electrode assembly 23 and the third wall 215, and the fourth gap Q7 communicates the ventilating channel 2521 and the pressure relief mechanism 24.

The fourth gap Q7 is formed between the electrode assembly 23 and the second wall 215.

The fourth gap Q7 may be formed by the spacing between the electrode assembly 23 and the third wall 215, or by providing a component with an exhaust groove.

In the above solution, the fourth gap Q7 is provided so that when the battery cell 20 thermally runs away, the gas in the shell 21 can flow to the pressure relief mechanism 24 through the ventilating channel 2521 and the fourth gap Q7, thereby improving the smoothness of gas flow. Even if a large amount of gas is generated in the area of the electrode assembly 23 near the electrode terminal 22, the gas can pass through the protrusion 252 and quickly move from the fourth gap Q7 toward the pressure relief hole of the pressure relief mechanism 24.

Referring to Fig. 3 and Fig. 4, and further referring to Fig. 8 and 9, according to some embodiments of the present application, the shell 21 comprises a case 212 and an end cover 211, the case 212 comprises a bottom wall 2121 and a side wall 2122, the side wall 2122 is provided around the bottom wall 2121, one end of the side wall 2122 is connected to the bottom wall 2121, the other end of the side wall 2122 forms an opening, the end cover 211 closes the opening, the first wall 213 is the end cover 211, and the second wall 214 is the side wall 2122 or the bottom wall 2121.

The bottom wall 2121 and the end cover 211 are provided opposite to each other along the thickness direction Z of the insulating member body 251, that is, along the thickness direction Z of the insulating member body 251, and the electrode assembly 23 is located between the bottom wall 2121 and the end cover 211.

In some embodiments, the bottom wall 2121 and the side wall 2122 may be integrally formed to facilitate processing and manufacturing.

The pressure relief mechanism 24 can be provided on the bottom wall 2121. In this case, the pressure relief mechanism 24 is far away from the electrode terminal 22. When the pressure relief mechanism 24 releases the internal pressure of the battery cell 20, the emissions (such as high-temperature and high-pressure gas, electrolyte solution, etc.) discharged through the pressure relief hole of the pressure relief mechanism 24 will not act on the electrode terminal 22 and electrical components connected to the electrode terminal 22 (such as circuit boards, busbars), so that the battery cell 20 has higher reliability.

The pressure relief mechanism 24 can also be provided on the side wall 2122. In this case, the pressure relief mechanism 24 is not adjacent to the electrode terminal 22, which can reduce the influence of the emissions discharged by the pressure relief mechanism 24 on the electrode terminal 22 and electrical components connected to the electrode terminal 22 (such as circuit boards, busbars), so that the battery cell 20 has higher reliability.

The second wall 214 is the side wall 2122 or the bottom wall 2121, and the pressure relief mechanism 24 can be provided on the side wall 2122 or the bottom wall 2121.

In the above solution, the bottom wall 2121 is located on the side of the electrode assembly 23 away from the end cover 211, and the pressure relief mechanism 24 is provided on the side wall 2122 or the bottom wall 2121 to adapt to different arrangement requirements of the battery cells 20 and facilitate pressure relief of the pressure relief mechanism 24.

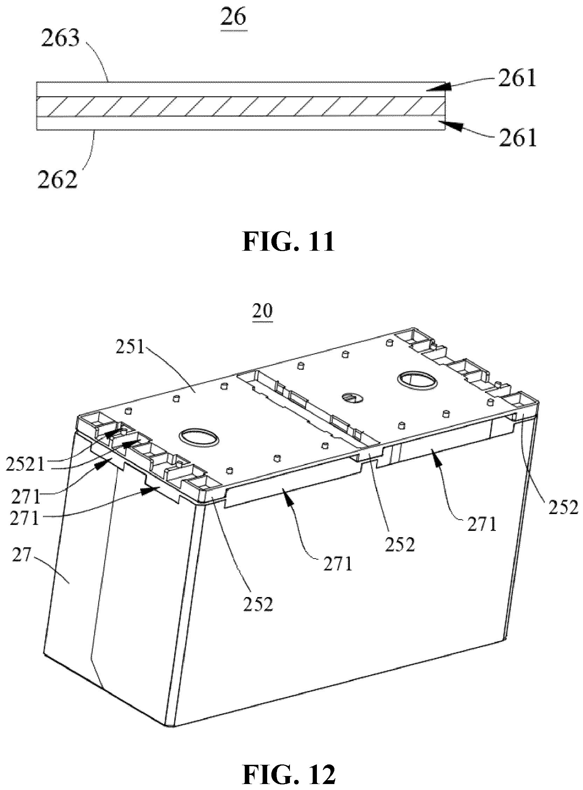

Referring to Fig. 3, Fig. 8 and Fig. 9, and further referring to Fig. 11, Fig. 11 is a schematic structural diagram of a spacer provided in some embodiments of the present application. According to some embodiments of the present application, the battery cell 20 further comprises a spacer 26, the spacer 26 is provided between at least one wall of the shell 21 other than the first wall 213 and the electrode assembly 23 to isolate the shell 21 from the electrode assembly 23. An exhaust groove 261 is provided on the side of the spacer 26 facing away from the electrode assembly 23 and/or on the side facing the electrode assembly 23. The exhaust groove 261 extends to the edge of the spacer 26.

The spacer 26 is a component used to isolate the shell 21 from the electrode assembly 23. The spacer 26 may be an electrically insulating member or a metal member.

In some embodiments, the spacer 26 may be located between the second wall 214 and the electrode assembly 23, and the spacer 26 may also be located between the third wall 215 and the electrode assembly 23.

In some embodiments, the spacer 26 is insulated from the shell 21 and/or the spacer 26 is insulated from the electrode assembly 23. For example, the spacer 26 is an electrically insulating member, and the spacer 26 insulates and isolates the shell 21 from the electrode assembly 23. Alternatively, the spacer 26 is a metal member, an insulating structure is provided between the spacer 26 and the shell 21, and an insulating structure is also provided between the spacer 26 and the electrode assembly 23.

In some embodiments, referring to Fig. 8, in an embodiment where the case 212 comprises a bottom wall 2121 and a side wall 2122, the spacer 26 is provided between the bottom wall 2121 and the electrode assembly 23 along the thickness direction Z of the insulating member body 251. The spacer 26 may be an electrically insulating member capable of insulating and isolating the bottom wall 2121 and the electrode assembly 23.

The exhaust groove 261 may be a groove provided on the side of the spacer 26 facing the electrode assembly 23 and/or the side facing away from the electrode assembly 23. In some embodiments, the spacer 26 may comprise a third surface 262 and a fourth surface 263, the third surface 262 is provided facing away from the electrode assembly 23, and the fourth surface 263 is provided facing the electrode assembly 23. The exhaust groove 261 may be a groove provided on the third surface 262, or the exhaust groove 261 may be a space enclosed by a protrusion protruding from the third surface 262 and the third surface 262. Alternatively, the exhaust groove 261 may be a groove provided on the fourth surface 263, or the exhaust groove 261 may be a space enclosed by a protrusion protruding from the fourth surface 263 and the fourth surface 263. Alternatively, referring to Fig. 11, the exhaust groove 261 can be a groove provided on the third surface 262 and the fourth surface 263, or the exhaust groove 261 can also be a space enclosed by a protrusion protruding from the third surface 262 and the third surface 262, and a space enclosed by a protrusion protruding from the fourth surface 263 and the fourth surface 263.

The exhaust groove 261 extends to the edge of the spacer 26, which means that the two ends of the exhaust groove 261 are respectively located at the two edges of the spacer 26. The two edges can be two connected edges of the spacer 26, or two oppositely provided edges. For example, the gas can enter the exhaust groove 261 from the edge on any side of the spacer 26 and leave the exhaust groove 261 from the edge on the other side.

In an embodiment where the exhaust groove 261 is provided on the side of the spacer 26 facing away from the electrode assembly 23 and the pressure relief mechanism 24 is provided on the bottom wall 2121, the opening of the exhaust groove 261 can face the bottom wall 2121, the exhaust groove 261 can form an exhaust channel together with the bottom wall 2121, and along the thickness direction Z of the insulating member body 251, the pressure relief mechanism 24 at least partially overlaps with the exhaust channel. When the battery cell 20 thermally runs away, the gas can flow toward the pressure relief mechanism 24 through the exhaust channel and be discharged from the pressure relief hole of the pressure relief mechanism 24.

In the above solution, the spacer 26 is used to isolate the shell 21 from the electrode assembly 23, reducing the risk of contact between the shell 21 and the electrode assembly 23. When the spacer 26 is provided below the electrode assembly 23, the spacer 26 can also play a role in supporting the electrode assembly 23, thereby reducing the risk of interference between the electrode assembly 23 and the shell 21. The exhaust groove 261 extends to the edge of the spacer 26, so as to reduce the obstruction of the spacer to gas flow and facilitate gas flow.

In the embodiment where "the second wall 214 is connected to the first wall 213, a third gap Q6 is provided between the electrode assembly 23 and the second wall 214, and the third gap Q6 is communicated with the ventilating channel 2521", the spacer 26 can be provided between the second wall 214 and the electrode assembly 23, the exhaust groove 261 comprises the third gap Q6, the ventilating channel 2521 is communicated with the third gap Q6, and the third gap Q6 is communicated with the pressure relief mechanism 24.

Referring to Fig. 10, in the embodiment where "the second wall 214 is connected to the first wall 213, a third gap Q6 is provided between the electrode assembly 23 and the second wall 214, and the third gap Q6 is communicated with the ventilating channel 2521", the spacer 26 can be provided between a wall opposite to the first wall 213 and the electrode assembly 23, the ventilating channel 2521 is communicated with the third gap Q6, the exhaust groove 261 is communicated with the third gap Q6, and the exhaust groove 261 is communicated with the pressure relief mechanism 24.

In the embodiment where "the second wall 214 and the first wall 213 are provided opposite to each other along the thickness direction Z of the insulating member body 251, the shell 21 further comprises a third wall 215, the third wall 215 is connected to the second wall 214 and the first wall 213, a fourth gap Q7 is provided between the electrode assembly 23 and the third wall 215, and the fourth gap Q7 communicates the ventilating channel 2521 and the pressure relief mechanism 24", the spacer 26 can be provided between the third wall 215 and the electrode assembly 23, the exhaust groove 261 comprises the fourth gap Q7, the ventilating channel 2521 is communicated with the fourth gap Q7, and the fourth gap Q7 is communicated with the pressure relief mechanism 24.

Referring to Fig. 9, in the embodiment where "the second wall 214 and the first wall 213 are provided opposite to each other along the thickness direction Z of the insulating member body 251, the shell 21 further comprises a third wall 215, the third wall 215 is connected to the second wall 214 and the first wall 213, a fourth gap Q7 is provided between the electrode assembly 23 and the third wall 215, and the fourth gap Q7 communicates the ventilating channel 2521 and the pressure relief mechanism 24", the spacer 26 can be provided between the second wall 214 and the electrode assembly 23, the ventilating channel 2521 is communicated with the fourth gap Q7, the exhaust groove 261 is communicated with the fourth gap Q7, and the exhaust groove 261 is communicated with the pressure relief mechanism 24. According to some embodiments of the present application, the spacer 26 is provided between the second wall 214 and the electrode assembly 23.

Referring to Fig. 8, In some embodiments, the first wall 213 and the second wall 214 are provided opposite to each other along the thickness direction Z of the insulating member body 251. The electrode assembly 23 can be provided above the second wall 214, and the spacer 26 is provided below the electrode assembly 23. The spacer 26 can support the electrode assembly 23. The exhaust groove 261 may be provided corresponding to the pressure relief mechanism 24, and the gas may quickly flow to the pressure relief mechanism 24 through the exhaust groove 261.

Referring to Fig. 3 and further referring to Fig. 12, Fig. 12 is a schematic diagram of an insulating member and an insulating film provided in some embodiments of the present application. According to some embodiments of the present application, the battery cell 20 further comprises an insulating film 27, the insulating film 27 is wrapped around the outside of the electrode assembly 23 and the insulating film 27 is used to insulate and isolate the electrode assembly 23 from the shell 21. The insulating film 27 is connected to the insulating member 25, and the insulating film 27 is provided with through holes 271, and the through holes 271 and the ventilating channels 2521 are provided correspondingly to communicate the through holes 271 and the ventilating channels 2521.

The insulating film 27 wraps the electrode assembly 23 so that the electrode assembly 23 is insulated and isolated from the shell 21. In order to ensure the insulation and isolation effect between the electrode assembly 23 and the shell 21, the insulation film 27 is usually provided around the edge of the electrode assembly 23.

The through holes 271 provided in the insulating film 27 are provided corresponding to the ventilating channels 2521, which can facilitate gas flow while ensuring the connection between the insulating film 27 and the insulating member 25 and the insulation and isolation effect of the insulating film 27 on the electrode assembly 23. The gas between the insulating film 27 and the shell 21 can pass through the through holes 271 via the ventilating channels 2521 and flow rapidly toward the pressure relief mechanism 24.

At the same time, in order to ensure smooth gas flow, the through hole 271 is located at one end of the insulating film 27 for connecting with the insulating member 25, and the through hole 271 is also provided between two adjacent protrusions 252, that is, the area of the insulating film 27 located between two adjacent through holes 271 is connected to the protrusion 252 of the insulating member 25.

According to some embodiments of the present application, the insulating film 27 is connected to the insulating member 25 by hot melting.

The insulating film 27 is connected to the protrusion 252 by heat melting, thereby ensuring the connection stability between the insulating film 27 and the insulating member 25.

Referring to Fig. 6, according to some embodiments of the present application, the insulating member body 251 further has a second surface 2512, the second surface 2512 and the first surface 2511 are provided opposite to each other along the thickness direction Z of the insulating member body 251, and a groove 2524 is formed at a corresponding position of the protrusion 252 on the second surface 2512.

In the above solution, a groove 2524 is formed at a corresponding position of the protrusion 252 on the second surface 2512, which can reduce the weight of the insulating member 25.

According to some embodiments of the present application, an embodiment of the present application further provides a battery 100 comprising the battery cell 20 provided in any of the above embodiments.

According to some embodiments of the present application, an embodiment of the present application further provides an electrical device comprising the battery cell 20 provided in any of the above embodiments, and the battery cell 20 is used for providing electric energy.

The electrical device can be any aforementioned device or system applying the battery cells 20.

According to some embodiments of the present application, referring to Figs. 3 to 6, 8, and 12, the embodiments of the present application provide a battery cell 20, the battery cell 20 is in a rectangular shape, and the battery cell 20 comprises a shell 21, an electrode terminals 22, an electrode assembly 23, a pressure relief mechanism 24, an insulating member 25, and a spacer 26.

The shell 21 may comprise an end cover 211 and a case 212. The case 212 comprises a bottom wall 2121 and a side wall 2122, the side wall 2122 is provided around the bottom wall 2121, one end of the side wall 2122 is connected to the bottom wall 2121, and the other end of the side wall 2122 forms an opening. The end cove 211 closes the opening to form an accommodating space for accommodating the electrode assembly 23.

The electrode terminal 22 is provided on the end cover 211, and the electrode assembly 23 is provided inside the case 212.

The pressure relief mechanism 24 is provided on the bottom wall 2121.

The insulating member 25 is provided between the end cover 211 and the electrode assembly 23, and the insulating member 25 comprises an insulating member body 251 and a protrusion 252. The insulating member body 251 has a first surface 2511 and a second surface 2512, the first surface 2511 and the second surface 2512 are provided opposite to each other along the thickness direction Z of the insulating member body 251, the first surface 2511 faces the electrode assembly 23, and the second surface 2512 faces the end cover 211 and is connected to the end cover 211. The protrusion 252 is formed on the first surface 2511, and the protrusion 252 abuts on the electrode assembly 23. The protrusion 252 is provided with a ventilating channel 2521, and the ventilating channel 2521 runs through the protrusion 252 along a direction intersecting with the thickness direction Z of the insulating member body 251. The protrusion 252 extends along the width direction (first direction X) of the insulating member body 251. The protrusion 252 is a cuboid. The ventilating channel 2521 runs through the protrusion 252 along the width direction (second direction Y) of the protrusion 252. The protrusion 252 is provided with a plurality of ventilating channels 2521, and the plurality of ventilating channels 2521 are provided at intervals along the first direction X.

The protrusion 252 comprises a first protrusion 252a, a second protrusion 252b and a third protrusion 252c, the first protrusion 252a and the second protrusion 252b are located at two ends of the insulating member body 251 along the length direction, and the third protrusion 252c is located between the first protrusion 252a and the second protrusion 252b. The first surface 2511, the first protrusion 252a, the third protrusion 252c and the electrode assembly 23 form a first cavity Q1, and along the length direction of the insulating member body 251, there is a first gap Q2 between the first protrusion 252a and the case 212. The ventilating channel 2521 comprises a first ventilating channel 2521a provided in the first protrusion 252a, and the first ventilating channel 2521a communicates the first cavity Q1 and the first gap Q2. The first surface 2511, the second protrusion 252b, the third protrusion 252c and the electrode assembly 23 form a second cavity Q3, and along the length direction of the insulating member body 251, there is a second gap Q4 between the second protrusion 252b and the case 212. The ventilating channel 2521 further comprises a second ventilating channel 2521b provided in the second protrusion 252b, and the second ventilating channel 2521b communicates the second cavity Q3 and the second gap Q4. The ventilating channel 2521 further comprises a third ventilating channel 2521c provided in the third protrusion 252c, and the third ventilating channel 2521c communicates the first cavity Q1 and the second cavity Q3.

The spacer 26 is provided between the electrode assembly 23 and the bottom wall 2121 to support the electrode assembly 23. An exhaust groove 261 is provided between the spacer 26 and the bottom wall 2121, and the exhaust groove 261 corresponds to the pressure relief mechanism 24.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather comprises all technical solutions falling within the scope of the claims.

## Claims

1. A battery cell, comprising:
a shell, comprising a first wall and a second wall;
an electrode terminal, provided on the first wall;
an electrode assembly, provided inside the shell;
a pressure relief mechanism, provided on the second wall;
an insulating member, provided between the first wall and the electrode assembly, wherein the insulating member comprises an insulating member body and a protrusion, the insulating member body has a first surface facing the electrode assembly, the protrusion is formed on the first surface and the protrusion abuts on the electrode assembly;
wherein the protrusion is provided with a ventilating channel, and the ventilating channel runs through the protrusion along a direction intersecting with the thickness direction of the insulating member body.

2. The battery cell according to claim 1, wherein the protrusion extends along a first direction, the ventilating channel runs through the protrusion along a second direction intersecting with the first direction, and the first direction and the second direction intersect with the thickness direction of the insulating member body.

3. The battery cell according to claim 2, wherein the protrusion comprises a bottom surface and an outer peripheral surface, the bottom surface is used to abut on the electrode assembly, the outer peripheral surface is provided around the bottom surface, the outer peripheral surface connects the bottom surface and the first surface, and the ventilating channel is provided on the outer peripheral surface.

4. The battery cell according to claim 2 or 3, wherein the protrusion is provided with a plurality of the ventilating channels, and the plurality of the ventilating channels are provided at intervals along the first direction.

5. The battery cell according to any one of claims 2 to 4, wherein there are a plurality of the protrusions, and the plurality of the protrusions are provided at intervals along the second direction.

6. The battery cell according to claim 5, wherein each of the protrusions has the ventilating channel.

7. The battery cell according to claim 5 or 6, wherein the protrusions comprise a first protrusion, a second protrusion and a third protrusion, the first protrusion and the second protrusion are located at two ends of the insulating member body along the second direction, and the third protrusion is located between the first protrusion and the second protrusion.

8. The battery cell according to claim 7, wherein the first surface, the first protrusion, the third protrusion and the electrode assembly form a first cavity, along the second direction, there is a first gap between the first protrusion and the shell, the ventilating channel comprises a first ventilating channel provided in the first protrusion, and the first ventilating channel communicates the first cavity and the first gap.

9. The battery cell according to claim 8, wherein the first surface, the second protrusion, the third protrusion and the electrode assembly form a second cavity, along the second direction, there is a second gap between the second protrusion and the shell, the ventilating channel further comprises a second ventilating channel provided in the second protrusion, and the second ventilating channel communicates the second cavity and the second gap.

10. The battery cell according to claim 9, wherein the ventilating channel further comprises a third ventilating channel provided in the third protrusion, and the third ventilating channel communicates the first cavity and the second cavity.

11. The battery cell according to claim 5 or 6, wherein the protrusions comprise a first protrusion and a second protrusion provided at intervals along the second direction, the first surface, the first protrusion, the second protrusion and the electrode assembly form a third cavity, along the second direction, there is a first gap between the first protrusion and the shell, there is a second gap between the second protrusion and the shell, the ventilating channel comprises a first ventilating channel provided in the first protrusion and a second ventilating channel provided in the second protrusion, the first ventilating channel communicates the first gap and the third cavity, and the second ventilating channel communicates the second gap and the third cavity.

12. The battery cell according to claim 1 or 2, wherein a plurality of the protrusions are provided along both the first direction and the second direction, the ventilating channels are formed between two adjacent protrusions of the plurality of the protrusions provided along the first direction and between two adjacent protrusions of the plurality of the protrusions provided along the second direction, and the first direction, the second direction and the thickness direction of the insulating member body intersect with each other.

13. The battery cell according to any one of claims 1 to 12, wherein the insulating member body is a rectangular plate, the protrusion extends along a first direction, and the first direction is the width direction of the insulating member body.

14. The battery cell according to any one of claims 1 to 13, wherein the second wall is connected to the first wall, a third gap is provided between the electrode assembly and the second wall, and the third gap is communicated with the ventilating channel.

15. The battery cell according to any one of claims 1 to 13, wherein the second wall and the first wall are provided opposite to each other along the thickness direction of the insulating member body, the shell further comprises a third wall, the third wall is connected to the second wall and the first wall, a fourth gap is provided between the electrode assembly and the third wall, and the fourth gap communicates the ventilating channel and the pressure relief mechanism.

16. The battery cell according to any one of claims 1 to 15, wherein the shell comprises a case and an end cover, the case comprises a bottom wall and a side wall, the side wall is provided around the bottom wall, one end of the side wall is connected to the bottom wall, the other end of the side wall forms an opening, the end cover closes the opening, the first wall is the end cover, and the second wall is the side wall or the bottom wall.

17. The battery cell according to any one of claims 1 to 16, wherein the battery cell further comprises:
a spacer, provided between at least one wall of the shell other than the first wall and the electrode assembly, and used to isolate the shell from the electrode assembly, wherein an exhaust groove is provided on the side of the spacer facing the electrode assembly and/or the side facing away from the electrode assembly, and the exhaust groove extends to the edge of the spacer.

18. The battery cell according to claim 17, wherein the spacer is provided between the second wall and the electrode assembly.

19. The battery cell according to any one of claims 1 to 18, wherein the battery cell further comprises:
an insulating film, wrapped around the outside of the electrode assembly and used to insulate and isolate the electrode assembly from the shell, wherein the insulating film is connected to the insulating member, the insulating film is provided with through holes, and the through holes and the ventilating channels are provided correspondingly to communicate the through holes and the ventilating channels.

20. The battery cell according to claim 19, wherein the insulating film is connected to the insulating member by hot melting.

21. The battery cell according to any one of claims 1 to 20, wherein the insulating member body further has a second surface, the second surface and the first surface are provided opposite to each other along the thickness direction of the insulating member body, and a groove is formed at a corresponding position of the protrusion on the second surface.

22. A battery, comprising the battery cell according to any one of claims 1 to 21.

23. An electrical device, comprising the battery cell according to any one of claims 1 to 21.
